# EUROPEAN PATENT APPLICATION

(11) **EP 4 775 427 A1**
(43) Date of publication of application: **15.07.2026**
(21) Application number: 25224019.7
(22) Date of filing: 16.12.2025
(51) Int. Cl.: B60K 35/10, B60K 35/22, B60K 35/81, B60K 37/20

(54) **WORK VEHICLE**

(30) Priority: 19.12.2024 JP 2024224181
(71) Applicant: Kubota Corporation, Osaka-shi, Osaka 530-0011 (JP)
(72) Inventor: SHOJI, Yusuke, SAKAI-SHI, OSAKA, 5900908 (JP); KOBAYASHI, Terumasa, SAKAI-SHI, OSAKA, 5900908 (JP); NISHIMURA, Masayuki, SAKAI-SHI, OSAKA, 5900908 (JP); WADA, Natsumi, SAKAI-SHI, OSAKA, 5900908 (JP)
(74) Representative: Cabinet Beau de Loménie

(57) **Abstract**

Provided is a work vehicle capable of improving operability.

A work vehicle (10) includes an operation panel (33) facing a driver (H), a steering post provided to extend from the operation panel (33) toward the driver (H), a display device (50) provided on the operation panel (33), and a rotation operation unit (41) provided on the operation panel (33) and operated by the driver (H).

## Description

### TECHNICAL FIELD

The present invention relates to a work vehicle.

### BACKGROUND ART

A work vehicle operated by a driver includes an operation panel near a driver's seat, and the operation panel includes a plurality of operation units operated by the driver. Examples of the operation unit include a key switch, a push button switch, and a dial.

The work vehicle disclosed in Patent Literature 1 includes a display device that displays various types of information, and a dial (rotation operation unit) that receives a rotation operation by a driver.

### CITATION LIST

### [PATENT LITERATURE]

PATENT LITERATURE 1: Japanese Laid-Open Patent Publication No. 2022-26000

### SUMMARY OF THE INVENTION

### [TECHNICAL PROBLEM]

In a case of the work vehicle disclosed in Patent Literature 1, an operation panel provided with a display device and a rotation operation unit is located on the right side of the driver's seat and is located on the right side for the driver sitting on the driver's seat.

In the work vehicle as described above, the operability can be improved by appropriately disposing the operation unit. In a work vehicle operated by a driver, improvement of operability of an operation panel is a problem.

Therefore, an object of the present invention is to provide a work vehicle capable of improving operability.

### [SOLUTION TO PROBLEM]

A work vehicle includes an operation panel facing a driver, a steering post extending from the operation panel toward the driver, a display device provided on the operation panel, and a rotation operation unit provided on the operation panel and operated by the driver.

### [ADVANTAGEOUS EFFECTS OF THE INVENTION]

Operability of an operation panel is improved.

### BRIEF DESCRIPTION OF DRAWINGS

FIG. 1 is a side view of a work vehicle;
FIG. 2 is a perspective view of a driving unit as viewed from a rear side;
FIG. 3 is a view of the driving unit as viewed from a right side;
FIG. 4 is an explanatory view of an operation panel and a periphery thereof;
FIG. 5 is an explanatory view of a rotation operation unit; and
FIG. 6 is an explanatory view illustrating another form of the operation panel.

### DETAILED DESCRIPTION

<Outline of Embodiment>

Hereinafter, an outline of embodiments of the invention will be listed and described.
(1) A work vehicle of the present embodiment includes an operation panel facing a driver, a steering post extending from the operation panel toward the driver, a display device provided on the operation panel, and a rotation operation unit provided on the operation panel and operated by the driver.

The operation panel faces the driver and is located in front of the driver. The display device and the rotation operation unit are provided on the operation panel, so that operability of the operation panel is improved.

(2) In the work vehicle according to (1), the steering post is located closer to the driver than the display device. The rotation operation unit is located on one side of the steering post in a left-right direction.

In the operation panel, the operability of the rotation operation unit is improved.

(3) In the work vehicle according to (1) or (2),
a different operation unit from the rotation operation unit is located on one side of the steering post in a left-right direction. The rotation operation unit is located farther from the steering post than the different operation unit.

In the operation panel, the operability of the rotation operation unit is improved.

(4) The work vehicle according to any one of (1) to (3) includes a handle provided on a tip portion side of the steering post. At least a part of the rotation operation unit is located between a virtual vertical plane passing through one end of the handle in a left-right direction and spreading in a front-rear direction and one end of the operation panel in the left-right direction.

Normally, the driver often grips the handle to operate the work vehicle. According to the above configuration, the driver can operate the rotation operation unit by lowering his/her hand (right hand or left hand) from the handle. The operability of the rotation operation unit is improved.

(5) In the work vehicle according to any one of (1) to (4), the rotation operation unit is used to change display of the display device.

The driver can operate the rotation operation unit while checking the display content of the display device.

(6) In the work vehicle according to any one of (1) to (5), the operation panel is provided with a plurality of operation units operated by the driver. The rotation operation unit is one of the operation units disposed outermost in a left-right direction on the operation panel among the plurality of operation units including the rotation operation unit.

The operation of the rotation operation unit is less likely to be disturbed by other operation units or operation devices.

(7) In the work vehicle according to any one of (1) to (6), the rotation operation unit includes a dial and push buttons located adjacent to the dial.

The driver easily performs a rotation operation of the dial and an operation of the push button performed in association with the rotation operation.

(8) In the work vehicle according to (7), the push buttons are located side by side adjacent to one side of the dial in a left-right direction.

When the driver operates the rotation operation unit with his/her right hand (or left hand), the dial can be operated with the thumb and the index finger, and the push button can be operated with the middle finger or the ring finger, so that the movement of his/her hand can be reduced.

(9) In the work vehicle according to any one of (1) to (8), the operation panel includes a first surface on which the display device is provided and a second surface that is located closer to the driver than the first surface and on which the rotation operation unit is provided. Regarding an inclination angle using a horizontal plane as a reference, the first surface has a larger inclination angle than the second surface.

The driver can operate the rotation operation unit with his/her right hand relaxed while visually recognizing the display device.

(10) In the work vehicle according to any one of (1) to (9), the rotation operation unit is located on one side in a left-right direction with respect to the display device and closer to the driver than the display device.

The driver can easily check both the display device and the rotation operation unit. It is easy to operate the rotation operation unit while visually recognizing the display device.

(11) In the work vehicle according to any one of (1) to (10), the rotation operation unit is located at a position away to one side in a left-right direction from the steering post located at a center of the operation panel in a left-right direction.

The operation of the rotation operation unit is less likely to be disturbed by the steering related operation device.

(12) The work vehicle according to any one of (1) to (11) includes a second operation unit provided on the operation panel and different from the rotation operation unit. The second operation unit is located in a region of the operation panel on one side in a left-right direction with respect to the steering post. The rotation operation unit is closer to the display device than the second operation unit.

In a case where the operation frequency of the rotation operation unit is higher than that of the second operation unit, the above disposition is preferable.

(13) The work vehicle according to any one of (1) to (12) includes a cruise lever provided on the operation panel and configured to control a traveling speed. The rotation operation unit has a function of performing an operation of adjusting a rotation speed of a drive unit. The rotation operation unit and the cruise lever are located in a region on one side in a left-right direction with respect to the steering post located at a center of the operation panel in a left-right direction.

The operation unit of a drive system is disposed in a region on one side in the left-right direction, and the operability is improved.

(14) The work vehicle according to (13) includes an on/off operation unit provided on the operation panel and configured to control on/off of the drive unit. The on/off operation unit is located in the region on one side in the left-right direction.

The operation units related to the driving operation of the work vehicle are collected in the region on one side of the operation panel in the left-right direction, and the operability is improved.

(15) The work vehicle according to any one of (1) to (14) includes an on/off operation unit provided on the operation panel and configured to control on/off of a drive unit. When viewed from a direction orthogonal to the operation panel, the on/off operation unit is located in a region between a circumscribed circle of a handle provided on a tip portion side of the steering post and the steering post.

The on/off operation unit is disposed to be hidden by the handle. It is possible to suppress an erroneous operation of the on/off operation unit during driving.

(16) The work vehicle according to any one of (1) to (15) includes an on/off operation unit provided on the operation panel and configured to control on/off of a drive unit. The on/off operation unit is located closer to a driver than the rotation operation unit.

The on/off operation unit is close to the driver, and the on/off operation unit can be operated in an emergency.

(17) The work vehicle according to any one of (1) to (16) includes an on/off operation unit provided on the operation panel and configured to control on/off of a drive unit. The on/off operation unit is located closer to the steering post than the rotation operation unit.

The on/off operation unit is disposed to be hidden by the handle. It is possible to suppress an erroneous operation of the on/off operation unit during driving.

### <Details of Embodiments of Invention>

Hereinafter, embodiments of the invention will be described in detail with reference to the drawings. Note that at least some of the embodiments described below may be arbitrarily combined.

### [Entire Configuration of Work Vehicle]

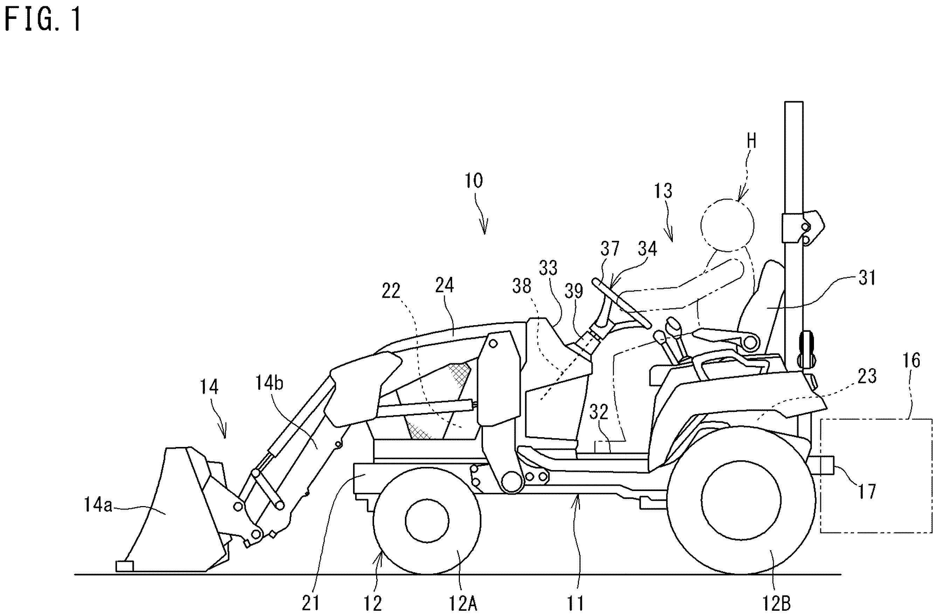

FIG. 1 is a side view of a work vehicle. A work vehicle 10 illustrated in FIG. 1 is a vehicle used for farmwork, and is specifically a small tractor. Note that the work vehicle of the present invention is not limited to the tractor, and may be a vehicle such as a construction machine or a utility vehicle.

In the present disclosure, a direction in which the work vehicle 10 moves forward (left direction in the case of FIG. 1) is defined as a front, a direction in which the work vehicle 10 moves backward is defined as a rear, a left side of the work vehicle 10 facing forward is defined as a left, and a right side of the work vehicle 10 facing forward is defined as a right. The front, rear, left, and right directions are the same as the front, rear, left, and right directions for a driver (user) sitting on a driver's seat 31 included in the work vehicle 10. The left-right direction is the width direction of the work vehicle 10, that is, the vehicle-width direction.

The work vehicle 10 includes a vehicle main body 11, a traveling device 12, and a driving unit 13. The work vehicle 10 illustrated in FIG. 1 further includes a work device 14 and a control device.

The vehicle main body 11 includes a body frame 21 serving as a frame of the vehicle, a drive unit 22, a gear box 23, and a front hood 24. The drive unit 22 is a device serving as a power source of the work vehicle 10, and may be an electric motor or an engine. The gear box 23 operates according to the operation of a driver H, changes the rotational speed of the output shaft of the drive unit 22, and changes the traveling direction of the work vehicle 10 back and forth. The traveling device 12 is operated by the power generated by the drive unit 22, and the work vehicle 10 travels.

In a case of the work vehicle 10 illustrated in FIG. 1, the work device 14 is a loader, and the work device 14 is mounted on the front portion of the body frame 21. The loader causes a hydraulic actuator to swing a bucket 14a and a boom 14b. The work device 14 may be a device other than the loader.

Another work device 16 can be connected to a rear portion of the vehicle main body 11. The work device 16 is replaceable, and various work devices 16 can be coupled to the vehicle main body 11 according to the work content. The vehicle main body 11 has a PTO shaft (power take-off shaft) 17. The PTO shaft 17 is one of output shafts of the gear box 23, and is rotated by power from the drive unit 22. The work device 16 can receive power (rotational force) from the PTO shaft 17 and operate. The work device 16 is, for example, a mower, and the mower operates by the rotation of the PTO shaft 17.

The traveling device 12 supports the vehicle main body 11 in a travelable manner. The traveling device 12 has left and right front wheels 12A and left and right rear wheels 12B. The front wheel 12A and the rear wheel 12B are rotationally driven by receiving power from the drive unit 22. The front wheel 12A and the rear wheel 12B are not limited to tires, and may be other forms such as crawlers.

The driving unit 13 is provided on the vehicle main body 11. The driving unit 13 includes the driver's seat 31, a driving floor 32, an operation panel 33, and a steering device 34.

The driver's seat 31 is a portion on which the driver H who drives and operates the work vehicle 10 sits. The driving floor 32 is located in front of and below the driver's seat 31. The driving floor 32 is a portion on which the driver H sitting on the driver's seat 31 places his/her foot. An operation pedal (not illustrated) that can be operated by the driver H sitting on the driver's seat 31 with his/her foot is provided on the driving floor 32.

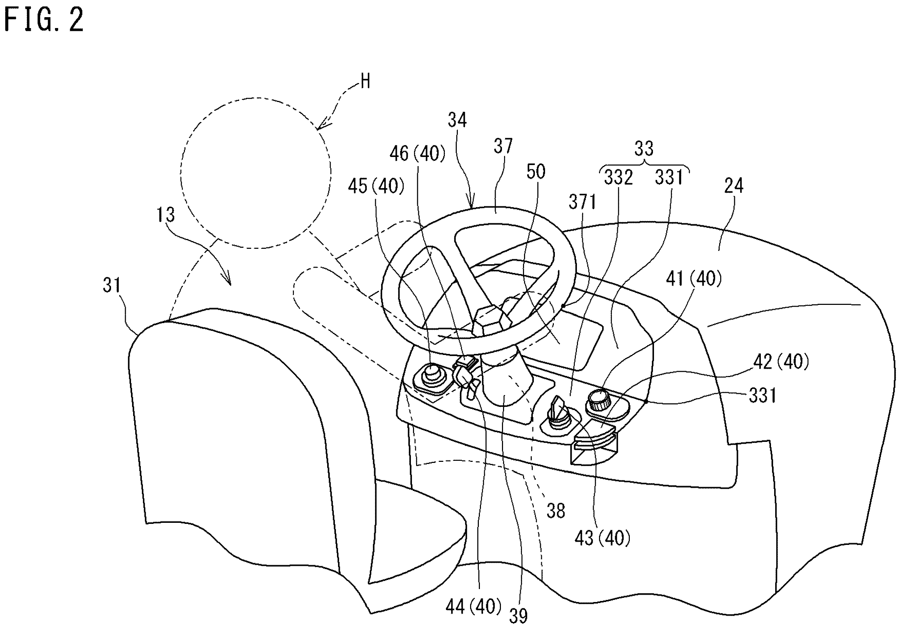

The operation panel 33 is located in front of the driver's seat 31. The operation panel 33 is provided at a position facing the driver H (particularly, his/her face) sitting on the driver's seat 31. The operation panel 33 includes a plurality of operation units 40 (see FIG. 2) manually operated by the driver H. The operation panel 33 is also referred to as an instrument panel. The operation panel 33 and the operation unit 40 will be described later.

The steering device 34 includes a handle 37, a steering shaft 38, and a steering post 39. The handle 37 is located in front of the driver's seat 31 and above the driving floor 32. The handle 37 of the present embodiment has an annular shape and is also referred to as a steering wheel. The steering shaft 38 is connected to the handle 37 and is rotated by an operation of the handle 37. By the rotation of the steering shaft 38, the direction in which the wheels (front wheels 12A) roll is changed, and the traveling direction of the work vehicle 10 in the left-right direction is changed.

The steering post 39 is a member surrounding the steering shaft 38, and is provided to extend from a part of the operation panel 33 toward the driver H sitting on the driver's seat 31. The steering post 39 is also referred to as a steering column. The handle 37 is located closer to the driver H than the operation panel 33, that is, closer to the driver's seat 31. In a case of the present embodiment, the steering device 34 has a tilt mechanism, and can swing the steering shaft 38 between the upper front position and the lower rear position to change the position of the handle 37.

The control device is a computer device including a processor such as a central processing unit (CPU) and a memory, and is, for example, a micro controller unit (MCU). In the control device, the processor performs various operations and processes according to a computer program stored in the memory. As a result, each unit (for example, the drive unit 22 or the display panel 33) of the work vehicle 10 is controlled.

### [Operation Panel 33]

FIG. 2 is a perspective view of the driving unit 13 as viewed from the rear side. The operation panel 33 includes a display device 50. The display device 50 is an output interface that displays information such as a state of the work vehicle 10 or a predetermined value to the driver H according to the output of the control device. The display device 50 is, for example, a monitor using a liquid crystal, and displays and outputs various types of information. In order to change the display of the display device 50, a rotation operation unit 41 to be described later is used. The display device 50 is located at the center of the operation panel 33 in the left-right direction.

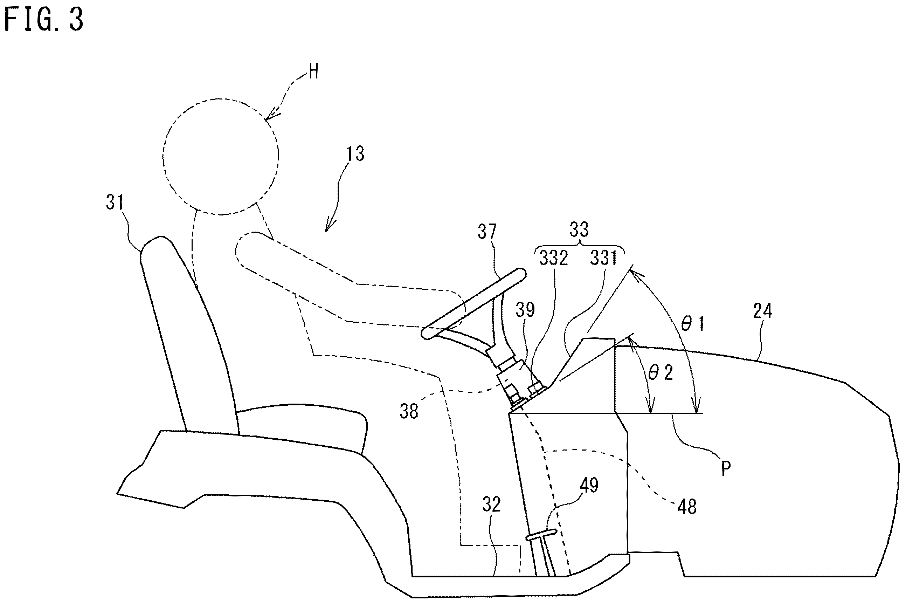

FIG. 3 is a view of the driving unit 13 as viewed from the right side. As illustrated in FIG. 2 and FIG. 3, the operation panel 33 has a first surface 331 on which the display device 50 is provided, and a second surface 332 located closer to the driver H than the first surface 331. The position on the driver H side is the position on the driver's seat 31 side. Each of the first surface 331 and the second surface 332 may partially have an uneven shape for the operation unit 40, but has a flat surface as a whole.

Regarding an inclination angle θ using a horizontal plane P as a reference, the first surface 331 has a larger inclination angle than the second surface 332. In FIG. 3, the inclination angle of the first surface 331 is "θ1", the inclination angle of the second surface 332 is "θ2", and θ1>θ2.

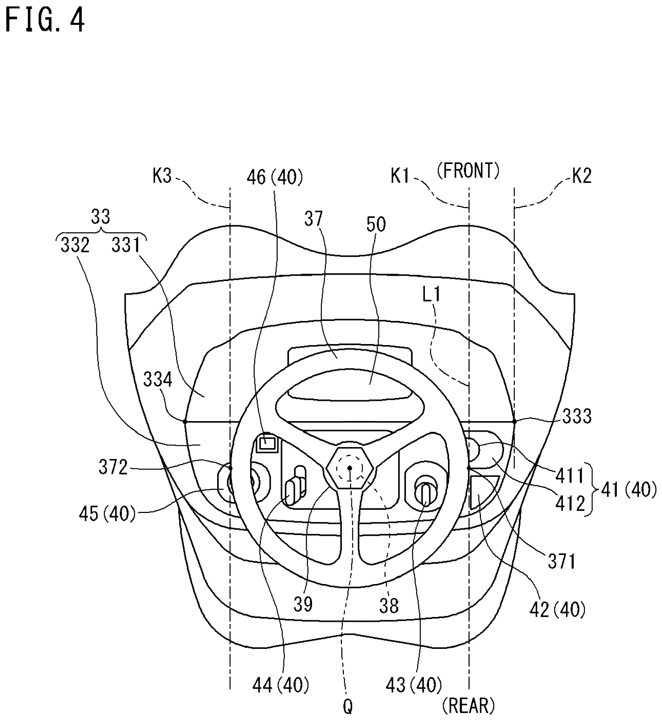

FIG. 4 is an explanatory view of the operation panel 33 and a periphery thereof. FIG. 4 is a view when viewed from a direction orthogonal to the second surface 332 of the operation panel 33. FIG. 3 and FIG. 4 illustrate a state in which the center line of the steering shaft 38 is orthogonal to the second surface 332.

The operation panel 33 includes the plurality of operation units 40 manually operated by the driver H. Each operation unit 40 is an input interface that receives an operation by the driver H. When the operation panel 33 is viewed from above the driver's seat 31, the operation panel appears as illustrated in FIG. 4, and when the driver H sitting on the driver's seat 31 views the operation panel 33, the operation panel appears approximately as illustrated in FIG. 4.

The plurality of operation units 40 includes the rotation operation unit 41, a cruise lever 42, an on/off operation unit 43, a tilt lever 44, a combination switch 45, and a stationary PTO switch 46. The rotation operation unit 41, the cruise lever 42, the on/off operation unit 43, the tilt lever 44, the combination switch 45, and the stationary PTO switch 46 are provided on the second surface 332 of the operation panel 33. The display device 50 is provided on the first surface 331 of the operation panel 33.

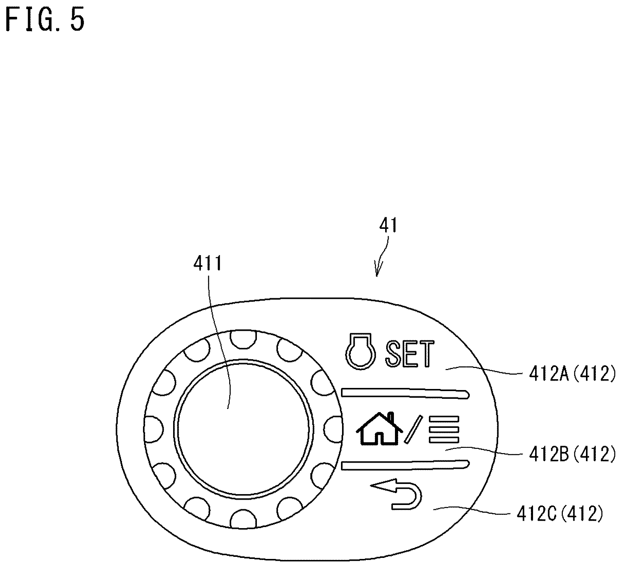

FIG. 5 is an explanatory view of the rotation operation unit 41. The rotation operation unit 41 includes one dial 411 and a plurality of push buttons 412. The dial 411 is a jog dial that receives a rotation operation by the driver H. The push buttons 412 are button switches that receive a push operation by the driver H.

The push buttons 412 are located adjacent to the dial 411. Therefore, the driver H can easily perform the rotation operation of the dial 411 and the operations of the push buttons 412 performed in association with the rotation operation.

The push buttons 412 are located side by side on the right side of the dial 411. In the case of the present embodiment, three push buttons 412 are located side by side in the front-rear direction adjacent to the dial 411. When the driver H operates the rotation operation unit 41 with his/her right hand, the dial 411 can be operated with the thumb and the index finger, and the push buttons 412 can be operated with the middle finger or the ring finger, so that the movement of his/her hand can be reduced.

An example of a function of the rotation operation unit 41 will be described. The rotation operation unit 41 is used to change the display of the display device 50 and also has a function of performing an operation of adjusting the rotation speed of the drive unit 22.

When the driver H rotates the dial 411 clockwise, the control device increases the rotation speed of the drive unit 22 according to the amount (rotation angle) of the rotation operation. In accordance with this rotation operation, information on the rotation speed is displayed on the display device 50, and the driver H can confirm the rotation speed. The rotation speed of the drive unit 22 affects the traveling speed of the work vehicle 10, the rotation speed of the PTO shaft 17, or the operation speed of the work devices 14 and 16.

In the case of the present embodiment, a frequently used rotation speed (for example, the idling rotational speed or the maximum rotational speed) among the rotation speeds of the drive unit 22 is set in the control device in advance as a default value. The display device 50 displays the plurality of default values side by side. One default value of the plurality of default values is displayed as a selection candidate (for example, displayed in a thick frame), and the default values displayed as the selection candidate (for example, displayed in a thick frame) are sequentially switched by rotating the dial 411. That is, the dial 411 is used to select one default value from the plurality of default values.

In a state where one default value is selected, one default value can be determined by pressing the dial 411 also having a function as a push button. When one default value is determined, the control device performs control to match the rotation speed of the drive unit 22 with the determined default value.

In the case of the present embodiment, three push buttons 412 are provided. The three push buttons 412 (412A, 412B, 412C) are disposed side by side from a side far from the driver H toward a side close to the driver H (from front to rear), and different functions are assigned to the push buttons. The first push button 412A has a preset function such as calling preset information. The second push button 412B has a function of switching between the home screen and the function screen in the display device 50. The third push button 412C has a function of returning to the previous screen in the display device 50.

Note that such functions of the rotation operation unit 41 are examples, and can be used for various purposes.

The cruise lever 42 will be described. An accelerator pedal 49 is provided on the driving floor 32 as an operation pedal that can be operated by the foot of the driver H sitting on the driver's seat 31 (see FIG. 3). The operation of the accelerator pedal 49 activates the work vehicle 10 and changes the traveling speed of the work vehicle 10.

The cruise lever 42 is connected, via a power transmission member 48, to a movable mechanism unit (not illustrated) linked with the accelerator pedal 49. When the driver H performs a pulling-up operation, the cruise lever 42 is held as it is. When the cruise lever 42 is pulled up, the state of the movable mechanism unit is maintained, and the traveling speed of the work vehicle 10 is kept constant. As a result, the work vehicle 10 can travel at a constant speed without the driver H continuously stepping on the accelerator pedal. As described above, the cruise lever 42 is a lever type switch for controlling the traveling speed.

The on/off operation unit 43 is an ignition key, and functions as a switch (key switch) for controlling on/off of the drive unit 22. By rotating the on/off operation unit 43 in the first direction, the drive unit 22 is turned on. In a case where the drive unit 22 is a motor, when being turned on, the drive unit enters a standby state in which a drive current can flow through the motor. Thereafter, the motor is rotationally driven according to the operation of the accelerator pedal, and the traveling of the work vehicle 10 is started.

When the on/off operation unit 43 is rotated in the second direction opposite to the first direction, the drive unit 22 is turned off. In the off state, the vehicle is in a stop state in which the drive current cannot flow to the motor.

The tilt lever 44 will be described. As described above, the position of the handle 37 can be changed by the tilt mechanism. By moving the tilt lever 44 in the first direction, the handle 37 and the steering shaft 38 are brought into a free movable state in the tilt mechanism. The handle 37 is adjusted to a desired position in the free state. When the tilt lever 44 is moved in the second direction opposite to the first direction, the handle 37 and the steering shaft 38 are not movable in the tilt mechanism.

The combination switch 45 includes a plurality of push button switches. Although not illustrated, the work vehicle 10 includes a direction indicator, an emergency blinking light, and a headlight. The combination switch 45 is an operation unit for operating the direction indicator for changing a traveling course, turning on and off the emergency blinking light, and turning on and off the headlight. The combination switch 45 is an auxiliary switch for assisting vehicle traveling.

The stationary PTO switch 46 will be described. As described above, the work vehicle 10 includes the PTO shaft 17. The work vehicle 10 is configured such that a sensor is provided on the driver's seat 31, and the PTO shaft 17 does not rotate unless the driver H sits on the driver's seat 31. Exceptionally, it may be necessary to rotate the PTO shaft 17 in a state where the driver H stands beside the work vehicle 10, for example. At this time, when the stationary PTO switch 46 is operated, the PTO shaft 17 is exceptionally rotatable, that is, the rotation of the PTO shaft 17 is exceptionally permitted. Note that a changeover switch for rotation and stop (on and off) of the PTO shaft 17 is provided in the vehicle main body 11 (fender).

### [Disposition of Operation Unit 40]

The disposition of the plurality of operation units 40 will be described.

As illustrated in FIG. 4, the operation unit 40 included in the work vehicle 10 of the present embodiment includes the operation panel 33 facing the driver H, the steering post 39 provided to extend from the operation panel 33 toward the driver H, the display device 50 provided on the operation panel 33, and the rotation operation unit 41 provided on the operation panel 33 and operated by the driver H. The operation panel 33 faces the driver H sitting on the driver's seat 31 and facing the front, and is located in front of the driver H. The operation panel 33 is provided with the plurality of operation units 40 including the display device 50 and the rotation operation unit 41. Therefore, the operability of the operation panel 33 is high.

The steering post 39 is located closer to the driver H (driver's seat 31 side) than the display device 50. The rotation operation unit 41 is located on the right side which is one side of the steering post 39 in the left-right direction.

On the right side of the steering post 39, the on/off operation unit 43 is located as the operation unit 40 different from the rotation operation unit 41. In a case where an intersection between the upper surface of the operation panel 33 (second surface 332) and the center line of the steering post 39 is set as a reference Q and a two-dimensional coordinate system is set on a plane including the upper surface, the rotation operation unit 41 is disposed farther from the reference Q than the on/off operation unit 43. That is, the rotation operation unit 41 is located farther from the steering post 39 than the on/off operation unit 43.

As illustrated in FIG. 4, at least a part of the rotation operation unit 41 is located between a virtual vertical plane K1 passing through a right end 371 of the handle 37 and spreading in the front-rear direction and a right end 333 of the operation panel 33. In the case of the present embodiment, a right half or more of the rotation operation unit 41 is located between the virtual vertical plane K1 and the right end 333 of the operation panel 33. Assuming that the virtual vertical plane K1 is a "first virtual vertical plane K1" and a virtual vertical plane that passes through the rightmost end 333 of the operation panel 33 and spreads in the front-rear direction is a "second virtual vertical plane K2", at least a part of the rotation operation unit 41 is located between the first virtual vertical plane K1 and the second virtual vertical plane K2 on the operation panel 33.

The rotation operation unit 41 is provided across an intersection line L1 between the first virtual vertical plane K1 and the operation panel 33 (second surface 332). Since FIG. 4 is a view of the operation panel 33 as viewed from the driver H side, that is, as viewed in plan view, the first virtual vertical plane K1 coincides with the intersection line L1 as illustrated in FIG. 4.

The rotation operation unit 41 is provided in a range within the width dimension of the palm, specifically, within 20 cm from the intersection line L1 to the right.

In the case of the present embodiment, the dial 411 included in the rotation operation unit 41 is located at a position overlapping the intersection line L1.

Alternatively, the rotation operation unit 41 may be located on the right side of the form illustrated in FIG. 4. That is, the entire rotation operation unit 41 may be provided in a region on the right side of the intersection line L1 between the first virtual vertical plane K1 and the operation panel 33 (second surface 332).

Normally, the driver H often grips the handle 37 to operate the work vehicle.

Therefore, according to the position of the rotation operation unit 41 as described above, the driver H can operate the rotation operation unit 41 by lowering his/her hand (right hand) from the handle 37. The operability of the rotation operation unit 41 is good.

As described above, the rotation operation unit 41 is used to change the display on the display device 50. Therefore, the driver H can operate the rotation operation unit 41 while checking the display content of the display device 50, and can easily perform the operation.

The plurality of operation units 40 is disposed on the operation panel 33. The rotation operation unit 41, the cruise lever 42, and the on/off operation unit 43 are disposed in a right-half region of the operation panel 33. The steering post 39 is located at the center of the operation panel 33 in the left-right direction. The rotation operation unit 41, the cruise lever 42, and the on/off operation unit 43 are disposed in a region on the right side of the steering post 39.

In the right-half region of the operation panel 33, the rotation operation unit 41 and the cruise lever 42 are disposed on the outermost side (right outer side) in the left-right direction. That is, the rotation operation unit 41 is one of the operation units 40 disposed on the outermost side (in the case of the present embodiment, the right outer side) in the left-right direction on the operation panel 33 among the plurality of operation units 40.

The rotation operation unit 41 is operated more frequently than the cruise lever 42 and the on/off operation unit 43 disposed on the same right side. Since the rotation operation unit 41 is disposed on the outer side (right outer side) in the left-right direction, the operation of the rotation operation unit 41 is less likely to be disturbed by the other operation units 40 or operation devices (for example, the handle 37).

As described with reference to FIG. 3, the operation panel 33 has the first surface 331 on which the display device 50 is provided and the second surface 332 located closer to the driver H than the first surface 331. The rotation operation unit 41 is provided on the second surface 332. Regarding the inclination angle θ using the horizontal plane P as a reference, the first surface 331 has a larger inclination angle than the second surface 332 (θ1>θ2). Thus, the driver H can operate the rotation operation unit 41 with his/her right hand relaxed while visually recognizing the display device 50.

The rotation operation unit 41 is located on the right side of the display device 50 and closer to the driver H than the display device 50, that is, on the driver's seat 31 side. The driver H can easily check both the display device 50 and the rotation operation unit 41. The driver H can easily operate the rotation operation unit 41 while visually recognizing the display device 50.

In particular, as described above, the operation panel 33 has the first surface 331 and the second surface 332 having the bending angle, the display device 50 is provided on the first surface 331, and the rotation operation unit 41 is provided on the second surface 332, so that both the display device 50 and the rotation operation unit 41 can be easily checked.

The rotation operation unit 41 is located at a position away to the right from the steering shaft 38 (steering post 39) located at the center of the operation panel 33 in the left-right direction. Moreover, the rotation operation unit 41 is located closer to the driver H than the display device 50.

Since the rotation operation unit 41 is located at a position away to the right from the steering shaft 38 and the steering post 39, the operation of the rotation operation unit 41 is less likely to be disturbed by the steering related operation devices, that is, the handle 37, the steering shaft 38, and the steering post 39.

In the right region of the operation panel 33, the plurality of operation units 40 includes the cruise lever 42 and the on/off operation unit 43 as a second operation unit different from the rotation operation unit 41. The cruise lever 42 and the on/off operation unit 43 (second operation unit) are located in a region of the operation panel 33 on the right side of the steering shaft 38 (steering post 39). Then, the rotation operation unit 41 is closer to the display device 50 than the cruise lever 42 and the on/off operation unit 43 (second operation unit). As described above, since the operation frequency of the rotation operation unit 41 is higher than those of the cruise lever 42 and the on/off operation unit 43, the above disposition is preferable.

The rotation operation unit 41 and the cruise lever 42 are located in a region on the right side of the steering shaft 38 (steering post 39) located at the center of the operation panel 33 in the left-right direction.

As described above, the rotation operation unit 41 and the cruise lever 42 function as operation units of a drive system (traveling system). Since such operation units are collectively disposed in the right region, the operability related to the drive system (traveling system) is high.

The on/off operation unit 43 is located in the right region of the operation panel 33. The on/off operation unit 43, the rotation operation unit 41, and the cruise lever 42 function as operation units related to the driving operation of the work vehicle 10. Since such operation units are collected in the right region of the operation panel 33, the operability related to the driving operation of the work vehicle 10 is high.

As illustrated in FIG. 4, when viewed from a direction orthogonal to the second surface 332 of the operation panel 33, the on/off operation unit 43 is located in a region between a circumscribed circle of the handle 37 and the steering shaft 38 (steering post 39). In the case of the present embodiment, since the handle 37 is circular, the circumscribed circle thereof coincides with the outer peripheral edge shape of the handle 37. In the case of the present embodiment, the entire on/off operation unit 43 is located in a region between the circumscribed circle of the handle 37 and the steering shaft 38 (steering post 39). The on/off operation unit 43 is disposed to be hidden by the handle 37. It is possible to suppress an erroneous operation of the on/off operation unit 43 during driving.

The on/off operation unit 43 is located closer to the driver than the rotation operation unit 41. The on/off operation unit 43 is located closer to the steering shaft 38 (steering post 39) than the rotation operation unit 41. The on/off operation unit 43 is close to the driver H (driver's seat 31), and the on/off operation unit 43 can be easily operated in an emergency.

The disposition of the operation units 40 in a left region of the operation panel 33 will be described. The tilt lever 44, the combination switch 45, and the stationary PTO switch 46 are disposed in the left region of the operation panel 33.

The tilt lever 44 is located close to the steering post 39. The combination switch 45 is provided on the left side of the tilt lever 44.

At least a part of the combination switch 45 is located between a third virtual vertical plane K3 passing through a left end 372 of the handle 37 and spreading in the front-rear direction and a left end 334 of the operation panel 33. Normally, the driver H often grips the handle 37 to operate the work vehicle. Therefore, according to the position of the combination switch 45 as described above, the driver H can operate the combination switch 45 by lowering his/her hand (left hand) from the handle 37. The operability of the combination switch 45 is improved.

The stationary PTO switch 46 is located closer to the display device 50 than the tilt lever 44 and the combination switch 45. As illustrated in FIG. 4, when viewed from a direction orthogonal to the second surface 332 of the operation panel 33, the stationary PTO switch 46 and the tilt lever 44 are located in a region between the circumscribed circle of the handle 37 and the steering shaft 38 (steering post 39).

In the case of the form illustrated in FIG. 4, in the operation panel 33, the display device 50 is provided on the first surface 331, and the rotation operation unit 41 and the other operation units 40 are provided on the second surface 332. The rotation operation unit 41 may be provided on the first surface 331.

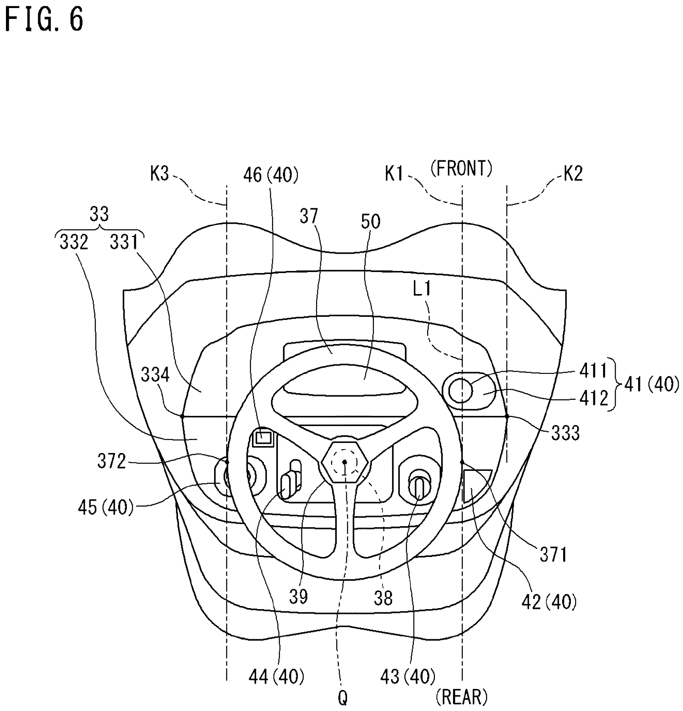

That is, FIG. 6 is an explanatory view illustrating another form of the operation panel 33. In the form illustrated in FIG. 6, the operation panel 33 has the first surface 331 and the second surface 332 located closer to the driver H than the first surface 331, and the display device 50 and the rotation operation unit 41 are provided on the first surface 331. Note that, in addition to the rotation operation unit 41, one or a plurality of other operation units 40 may be provided on the first surface 331. Furthermore, in FIG. 6, another operation unit 40 may be provided on the first surface 331 instead of the rotation operation unit 41. The display device 50 and one or a plurality of operation units 40 may be provided on the first surface 331.

### [Others]

As described above, in the case of the present embodiment, the case where the plurality of operation units 40 is disposed on the operation panel 33 has been described. However, all of the operation units 40 described above may not necessarily be provided on the operation panel 33, and one or the plurality of operation units 40 may be omitted.

The operation form of each operation unit 40 can be changed into a switch type or a lever type.

The disposition of the plurality of operation units 40 provided on the operation panel 33 may be opposite in the left-right direction. In a case where the disposition is reversed, "right" is read as "left" and "left" is read as "right" in each of the above descriptions.

The above embodiment is illustrative in all respects and is not restrictive. The scope of the present invention is defined not by the embodiment but by the claims, and includes all modifications within the scope equivalent to the configuration described in the claims.

### [Supplementary Note]

The work vehicle of the present disclosure includes the inventions described below. In addition, each of the following inventions can have at least a part of each configuration described with reference to FIG. 1 to FIG. 6.
[1] The work vehicle 10 includes the handle 37 provided on the tip portion side of the steering post 39. At least a part of the rotation operation unit 41 is located between the virtual vertical plane K1 that passes through the end (right end 371) on one side of the handle 37 in the left-right direction and spreads in the front-rear direction and the end (right end 333) on one side of the operation panel 33 in the left-right direction.

Normally, the driver H often grips the handle 37 to operate the work vehicle 10. According to the above configuration, the driver H can operate the rotation operation unit 41 by lowering his/her hand (right hand or left hand) from the handle 37. The operability of the rotation operation unit 41 is improved.

[2] The work vehicle 10 includes the operation panel 33 including the plurality of operation units 40 facing the driver H and operated by the driver H. The plurality of operation units 40 includes the rotation operation unit 41. The rotation operation unit 41 is one of the operation units 40 disposed outermost in the left-right direction on the operation panel 33 among the plurality of operation units 40.

According to the work vehicle 10 of [2], the operation of the rotation operation unit 41 is less likely to be disturbed by the other operation units 40 or operation devices.

[3] The work vehicle 10 includes the operation panel 33 including the plurality of operation units 40 facing the driver H and operated by the driver H. The plurality of operation units 40 includes the rotation operation unit 41. The rotation operation unit 41 includes the dial 411 and the push buttons 412 located adjacent to the dial 411. The push buttons 412 are located side by side adjacent to one side of the dial 411 in the left-right direction.

According to the work vehicle 10 of [3], when the driver H operates the rotation operation unit 41 with his/her hand, the dial 411 can be operated with the thumb and the index finger, and the push buttons 412 can be operated with the middle finger or the ring finger, so that the movement of his/her hand can be reduced.

[4] The work vehicle 10 includes the operation panel 33 including the plurality of operation units 40 facing the driver H and operated by the driver H. The operation panel 33 includes the display device 50. The plurality of operation units 40 includes the rotation operation unit 41. The rotation operation unit 41 is located on one side (for example, right side) in the left-right direction with respect to the display device 50 and closer to the driver H than the display device 50.

According to the work vehicle 10 of [4], the driver H can easily check both the display device 50 and the rotation operation unit 41. The driver H can easily operate the rotation operation unit 41 while visually recognizing the display device 50.

[5] In the work vehicle 10 including the rotation operation unit 41 and the display device 50, the operation panel 33 has the first surface 331 on which the display device 50 is provided, and the second surface 332 that is located closer to the driver H than the first surface 331 and on which the rotation operation unit 41 is provided. Regarding the inclination angle θ using the horizontal plane P as a reference, the first surface 331 has a larger inclination angle than the second surface 332.

According to the work vehicle 10 of [5], the driver H can operate the rotation operation unit 41 with his/her hand relaxed while visually recognizing the display device 50.

[6] The work vehicle 10 includes the operation panel 33 including the plurality of operation units 40 facing the driver H and operated by the driver H. The plurality of operation units 40 includes the rotation operation unit 41. The rotation operation unit 41 is located at a position away from the steering shaft 38 (steering post 39) located at the center of the operation panel 33 in the left-right direction toward one side (for example, right side) in the left-right direction.

According to the work vehicle 10 of [6], the operation of the rotation operation unit 41 is less likely to be disturbed by the steering-related operation device.

[7] The work vehicle 10 includes the operation panel 33 including the plurality of operation units 40 facing the driver H and operated by the driver H. The plurality of operation units 40 includes the rotation operation unit 41. The rotation operation unit 41 has a function of performing an operation of adjusting the rotation speed of the drive unit 22. The plurality of operation units 40 includes the cruise lever 42 for controlling a traveling speed. The rotation operation unit 41 and the cruise lever 42 are located in a region on one side (for example, right side) in the left-right direction with respect to the steering shaft 38 (steering post 39) located at the center of the operation panel 33 in the left-right direction.

According to the work vehicle 10 of [7], the operation unit 40 of the drive system (traveling system) is disposed in the region on one side in the left-right direction, and the operability is improved.

[8] The work vehicle 10 includes the operation panel 33 including the plurality of operation units 40 facing the driver H and operated by the driver H, and the handle 37 located closer to the driver H than the operation panel 33. The plurality of operation units 40 includes the on/off operation unit 43 for controlling on/off of the drive unit 22. The on/off operation unit 43 is located in a region between the circumscribed circle of the handle 37 and the steering shaft 38 (steering post 39).

According to the work vehicle 10 of [8], the on/off operation unit 43 is disposed to be hidden by the handle 37. It is possible to suppress an erroneous operation of the on/off operation unit 43 during driving.

[9] The work vehicle 10 includes the operation panel 33 including the plurality of operation units 40 facing the driver H and operated by the driver H. The plurality of operation units 40 includes the rotation operation unit 41 and the on/off operation unit 43 for controlling on/off of the drive unit 22. The on/off operation unit 43 is located closer to the driver H than the rotation operation unit 41.

According to the work vehicle 10 of [9], the on/off operation unit 43 is close to the driver H, and the on/off operation unit 43 can be operated in an emergency.

[10] The work vehicle 10 includes the operation panel 33 including the plurality of operation units 40 facing the driver H and operated by the driver H. The plurality of operation units 40 includes the rotation operation unit 41 and the on/off operation unit 43 for controlling on/off of the drive unit 22. The on/off operation unit 43 is located closer to the steering shaft 38 (steering post 39) than the rotation operation unit 41.

According to the work vehicle 10 of [10], the on/off operation unit 43 is disposed to be hidden by the handle 37 connected to the steering shaft 38. It is possible to suppress an erroneous operation of the on/off operation unit 43 during driving.

### REFERENCE SIGNS LIST

- 10: work vehicle
- 22: drive unit
- 33: operation panel
- 37: handle
- 38: steering shaft
- 39: steering post
- 40: operation unit
- 41: rotation operation unit
- 42: cruise lever (second operation unit)
- 43: on/off operation unit (second operation unit)
- 50: display device
- 331: first surface
- 332: second surface
- 333: right end of operation panel
- 371: right end of handle
- 411: dial
- 412: push button
- H: driver
- K1: virtual vertical plane
- θ1: inclination angle of first surface
- θ2: inclination angle of second surface

## Claims

1. A work vehicle (10) comprising:
an operation panel (33) facing a driver (H);
a steering post (39) extending from the operation panel (33) toward the driver (H);
a display device (50) provided on the operation panel (33); and
a rotation operation unit (41) provided on the operation panel (33) and configured to be operated by the driver (H).

2. The work vehicle (10) according to claim 1,
wherein the steering post (39) is located closer to the driver (H) than the display device (50), and
the rotation operation unit (41) is located on one side of the steering post (39) in a left-right direction.

3. The work vehicle (10) according to claim 1 or 2,
wherein a different operation unit (43) from the rotation operation unit (41) is located on one side of the steering post (39) in a left-right direction, and
the rotation operation unit (41) is located farther from the steering post (39) than the different operation unit (43).

4. The work vehicle (10) according to any one of claims 1 to 3, comprising
a handle (37) provided on a tip portion side of the steering post (39),
wherein at least a part of the rotation operation unit (41) is located between a virtual vertical plane (K1) passing through one end of the handle (37) in a left-right direction and spreading in a front-rear direction and one end of the operation panel (33) in the left-right direction.

5. The work vehicle (10) according to any one of claims 1 to 4, wherein the rotation operation unit (41) is used to change display of the display device (50).

6. The work vehicle (10) according to any one of claims 1 to 5, wherein the operation panel (33) is provided with a plurality of operation units (40) configured to be operated by the driver (H), and
the rotation operation unit (41) is one of the operation units (40) disposed outermost in a left-right direction on the operation panel (33) among the plurality of operation units (40) including the rotation operation unit (41).

7. The work vehicle (10) according to any one of claims 1 to 6, wherein the rotation operation unit (41) includes a dial (411) and push buttons (412) located adjacent to the dial (411).

8. The work vehicle (10) according to claim 7,
wherein the push buttons (412) are located side by side adjacent to one side of the dial (411) in a left-right direction.

9. The work vehicle (10) according to any one of claims 1 to 8, wherein the operation panel (33) includes a first surface (331) on which the display device (50) is provided and a second surface (332) that is located closer to the driver than the first surface (331) and on which the rotation operation unit (41) is provided, and
regarding an inclination angle using a horizontal plane as a reference, the first surface (331) has a larger inclination angle than the second surface (332).

10. The work vehicle (10) according to any one of claims 1 to 9, wherein the rotation operation unit (41) is located on one side in a left-right direction with respect to the display device (50) and closer to the driver (H) than the display device (50).

11. The work vehicle (10) according to any one of claims 1 to 10, wherein the rotation operation unit (41) is located at a position away to one side in a left-right direction of the steering post (39) located at a center of the operation panel (33) in a left-right direction.

12. The work vehicle (10) according to any one of claims 1 to 11, comprising
a second operation unit (42) provided on the operation panel (33) and different from the rotation operation unit (41),
wherein the second operation unit (42) is located in a region of the operation panel (33) on one side in a left-right direction with respect to the steering post (39), and
the rotation operation unit (41) is closer to the display device (50) than the second operation unit (42).

13. The work vehicle (10) according to any one of claims 1 to 12, comprising
a cruise lever (42) provided on the operation panel (33) and configured to control a traveling speed,
wherein the rotation operation unit (41) has a function of performing an operation of adjusting a rotation speed of a drive unit (22), and
the rotation operation unit (41) and the cruise lever (42) are located in a region on one side in a left-right direction with respect to the steering post (39) located at a center of the operation panel (33) in a left-right direction.

14. The work vehicle (10) according to claim 13, comprising
an on/off operation unit (43) provided on the operation panel (33) and configured to control on/off of the drive unit (22),
wherein the on/off operation unit (43) is located in the region on one side in the left-right direction.

15. The work vehicle (10) according to any one of claims 1 to 14, comprising
an on/off operation unit (43) provided on the operation panel (33) and configured to control on/off of a drive unit (22),
wherein when viewed from a direction orthogonal to the operation panel (33), the on/off operation unit (43) is located in a region between a circumscribed circle of a handle (37) provided on a tip portion side of the steering post (39) and the steering post (39).
